# EUROPÄISCHE PATENTSCHRIFT

(11) **EP 0 438 517 B1**
(45) Veröffentlichungstag und Bekanntmachung des Hinweises auf die Patenterteilung: **26.05.1993**
(21) Anmeldenummer: 89912236.0
(22) Anmeldetag: 10.10.1989
(51) Int. Cl.: H02K 5/128, H02K 9/197

(54) **DRUCKFEST GEKAPSELTER SPALTROHRMOTOR**
CANNED MOTOR PUMP WITH PRESSURE-PROOF CASING
MOTEUR A GAINE BLINDE ANTIDEFLAGRANT

(30) Priorität: 12.10.1988 DE 3834668
(43) Veröffentlichungstag der Anmeldung: 31.07.1991
(73) Patentinhaber: KSB Aktiengesellschaft, 67227 Frankenthal (DE)
(72) Erfinder: RUPPRECHT, Peter, D-8580 Bayreuth (DE)
(86) Internationale Anmeldenummer: EP8901195
(87) Internationale Veröffentlichungsnummer: WO9004279

(56) Entgegenhaltungen:
- BE-A- 649 719
- DE-A- 1 488 433
- DE-A- 2 006 681
- DE-A- 3 150 724
- US-A- 2 938 131

## Beschreibung

Die Erfindung betrifft einen Spaltrohrmotor gemäß dem Oberbegriff des Anspruches 1.

Bisher ist es üblich, die in Spaltrohrmotoren durch Verlustleistung entstehende Wärme mittels eines durch den Rotorraum geleiteten Flüssigkeitsstroms abzuführen. Dieser Flüssigkeitsstrom ist entweder ein vom Gesamtförderstrom der Kreiselpumpe abgezweigter Teilstrom oder ein von einem eigens hierfür vorgesehenen Laufrad erzeugter Strom.

Falls die durch den Rotorraum geleitete Flüssigkeit explosibel ist, müssen Schutzbedingungen erfüllt werden, die in einschlägigen Vorschriften festgehalten sind. So ist vor allem auf die Anordnung von Explosionsschutzspalten im Strömungsweg der durch den Rotorraum geleiteten Flüssigkeit zu achten. Als weitere der Sicherheit dienende Maßnahme ist die druckfeste Kapselung des Statorraumes bekannt. Im Rahmen einer angestrebten erhöhten Sicherheit und sich abzeichnender Vorschriften für einen Sonderschutz, muß bei Verwirklichung der genannten Maßnahmen noch eine zusätzliche Überwachung des Rotorraumes während des Betriebes vorgesehen werden.

Die Durchströmung eines Spaltrohrmotors durch eine ursprünglich hierfür nicht bestimmte Flüssigkeit bringt neben einer möglicherweise geringen Eignung dieser Flüssigkeit für Kühlzwecke verschiedene weitere Probleme mit sich. Sollte diese Flüssigkeit z. B. feste Beimengungen enthalten, so können sich Verschmutzungen, das Zusetzen von Spalten, ein erhöhter Verschleiß und weitere unerwünschte Folge-erscheinungen ergeben. Die Anordnung von Filtereinrichtungen vor dem Rotorraum des Spaltrohrmotors vermag in vielen Fällen nur eine zeitweilige Beseitigung dieses Problems zu bringen. Da es bei fehlender Überwachung und Wartung der Filtereinrichtungen zu einem Verstopfen der Filter kommen kann, liegt hierin eine Gefahr für eine mangelnde Versorgung des Spaltrohrmotors mit kühlender Flüssigkeit. Da aber der Spaltrohrmotor eines ständigen Kühlstromes bedarf, wird ein solcher Mangel binnen kurzem zum Ausfall des Spaltrohrmotors führen.

Eine weitere Gefahr ergibt sich bei solchen Spaltrohrmotoren, die als Antrieb von Kreiselpumpen zur Förderung explosibler, leicht ausgasender oder nahe ihres Siedepunktes geförderter Flüssigkeiten dienen. Die von der Druckseite der Kreiselpumpe in den Rotorraum eingeleitete Förderflüssigkeit wird auf ihrem Weg durch den Rotorraum zunehmend entspannt und erwärmt, bevor sie zur Saugseite der Kreiselpumpe abfließt. Es besteht die Gefahr eines Verdampfens oder Ausgasens der Flüssigkeit, des Überschreitens der Explosionstemperatur. Hierdurch kann es zu einem Trockenlauf in den Lagern und zu einem Ausfall des Aggregates kommen.

Aus der DE-A- 2 006 681 ist ein derartiges Elektrotauchpumpenaggregat für Behälter mit explosiblen Flüssigkeiten bekannt.

Der Erfindung liegt die Aufgabe zugrunde, einen druckfest gekapselten Spaltrohrmotor zu schaffen, der zur Kühlung des Rotorraumes nicht des Durchstroms der mit der angetriebenen Maschine in Berührung stehenden Flüssigkeit bedarf.

Die gestellte Aufgabe wird erfindungsgemäß gelöst durch einen im Rotorraum des Spaltrohrmotors angeordneten Wärmeaustauscher, welcher von einem von außerhalb des Rotorraumes kommenden Fluid durchströmt wird, und eine am Ausgang des Rotorraumes angeordnete Öffnung, deren Größe so bemessen ist, daß einerseits die Entlüftung des Rotorraumes bei Inbetriebnahme des Spaltrohrmotors gewährleistet, andererseits der Durchstrom von Flüssigkeit auf ein erreichbares Mindestmaß begrenzt wird.

Durch die erfindungsgemäße Gestaltung wird erreicht, daß die Motorverlustwärme nicht mehr auf direktem Weg, also durch ein den Rotorraum passierendes, möglicherweise verschmutztes Medium abgeführt wird. Die indirekte Abführung der Wärme über einen Wärmeaustauscher hat den Vorteil, daß das Kühlmedium nicht mehr mit dem Rotorraum in Berührung kommt. Dies erlaubt den Einsatz verschiedener Kühlmedien, also beispielsweise einer verschmutzten, ungefilterten Förderflüssigkeit oder eines für die Kühlung besonders geeigneten Fluids, das auch ein Gas sein kann. Das hiermit kombinierte Merkmal, die eine Entlüftung des Rotorraums gestattende, den Durchfluß aber auf ein erreichbares Mindestmaß begrenzende Öffnung am Ausgang des Rotorraumes, stellt dabei die funktionsnotwendige Füllung des Rotorraumes mit Flüssigkeit sicher und verhindert einen Druckabfall und somit ein Verdampfen innerhalb des Rotorraumes. Die Menge der durchströmenden Flüssigkeit entspricht bei Beginn des Motorbetriebs etwa einer größeren, gesteuerten Leckage. Ein Zusetzen der engen Öffnung am Ausgang des Rotorraumes nach der Entlüftung bleibt ohne nachteilige Folgen, da der einmal gefüllte und entlüftete Rotorraum nicht mehr durchströmt werden muß. Tatsächlich ist es von Vorteil, wenn die Öffnung nach dem Entlüftungsvorgang verschlossen wird.

Um die Wärmeabfuhr zu verbessern, kann es nützlich sein, die im Rotorraum befindliche Flüssigkeit durch eine auf der Rotorwelle angeordnete Einrichtung zu verwirbeln. Hierzu können beispielsweise im Bereich des Wärmeaustauschers angeordnete Vorsprünge auf der Rotorwelle dienen.

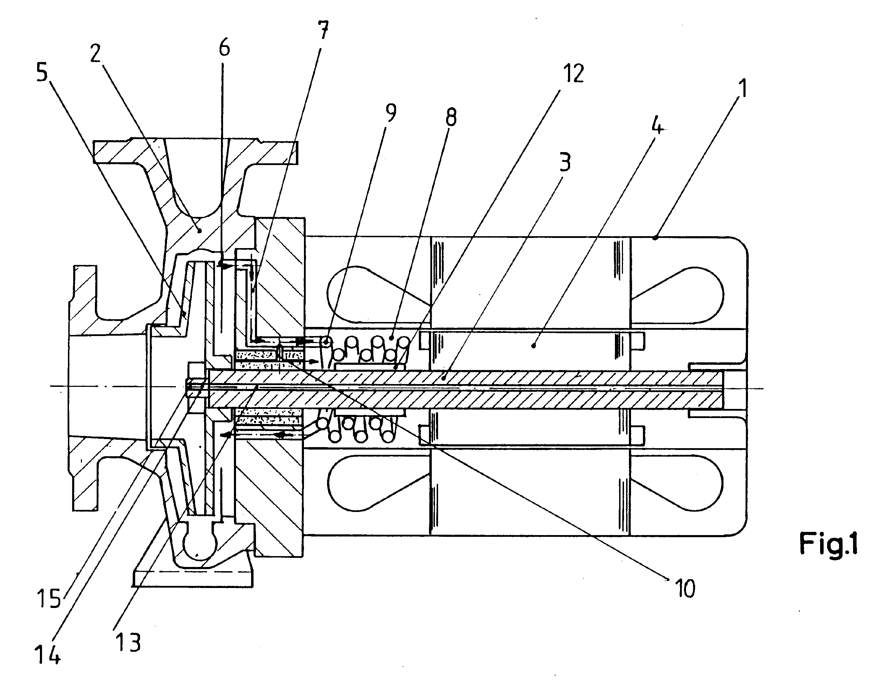

Anhand eines Ausführungsbeispiels wird die Erfindung näher erläutert. Die Zeichnung zeigt in
- Fig. 1: eine Spaltrohrmotorpumpe in Schnittdarstellung; in

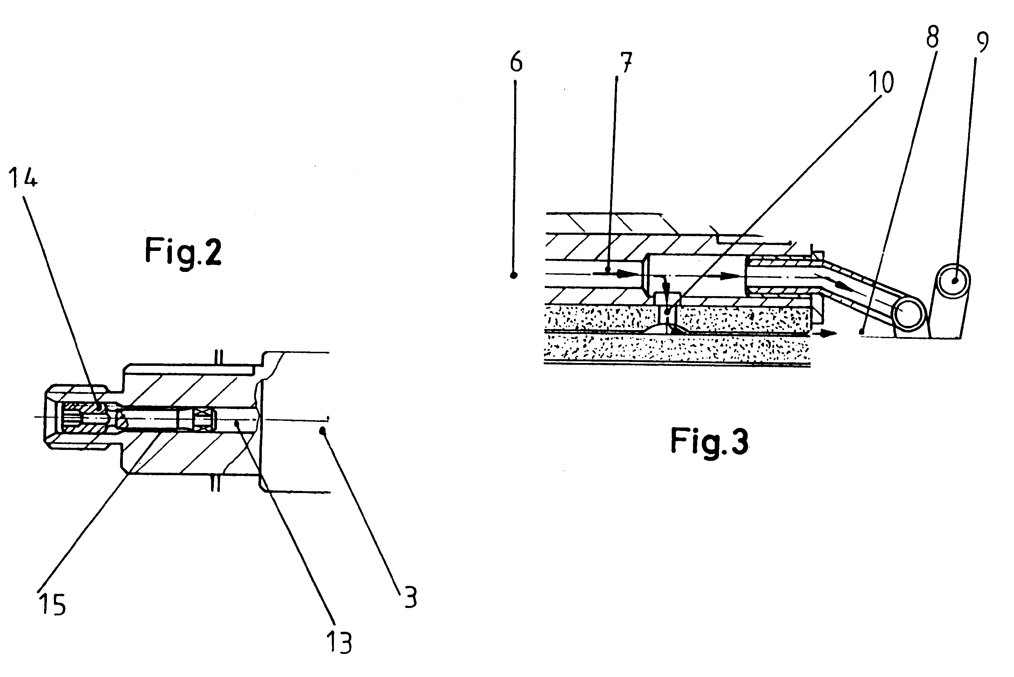

- Fig. 2: einen im Bereich des Pumpenlaufrades gelegenen Ausschnitt aus der Spaltrohrmotorpumpe der Fig. 1; und die
- Fig. 3: einen im Bereich des Wärmeaustauschers gelegenen Ausschnitt aus der Spaltrohrmotorpumpe der Fig. 1.

Ein Spaltrohrmotor (1) ist mit einer Kreiselpumpe (2) über eine gemeinsame Hohlwelle (3) verbunden. Die Hohlwelle (3) trägt also einerseits den Rotor (4) des Spaltrohrmotors (1) und andererseits das Laufrad (5) der Kreiselpumpe (2).

Aus dem Druckraum (6) der Kreiselpumpe (2) führt ein Kanal (7) in den Spaltrohrmotor (1), wo er sich verzweigt. Über einen Zweig des Kanals (7) wird ein im Rotorraum (8) angeordneter Wärmeaustauscher (9) beschickt, während der andere Zweig über eine Bohrung (10) in den flüssigkeitsgefüllten Teil des Rotorraumes (8) führt.

Der die Hohlwelle (3) umschließende Wärmeaustauscher (9) mündet in einem Bereich des Druckraumes (6), in dem ein geringerer Druck als am Eingang des Kanals (7) herrscht. Der Wärmeaustauscher (9) wird somit ständig von der Förderflüssigkeit durchströmt. Zur Verbesserung der Wärmeabfuhr aus dem Rotorraum (8) sind am Umfang der Hohlwelle (3) Vorsprünge (12) angeordnet, die für eine Verwirbelung der im Rotorraum (8) befindlichen Flüssigkeit sorgen.

Der in den Rotorraum (8) geleitete Zweigstrom gelangt über die Lager- und Explosionsschutzspalte des Spaltrohrmotors (1) in den Kanal (13) der Hohlwelle (3) und wird ebenfalls zur Saugseite der Kreiselpumpe (2) geführt. In die Mündung des Kanales (13) ist ein Einsatzteil (14) eingeschraubt, das einen Spalt (15) beläßt. Der Spalt (15) ist sehr eng bemessen, so daß er einerseits den Explosionsschutzbedingungen genügt und andererseits eine so starke Drosselwirkung entfaltet, daß der Durchfluß durch den Rotorraum (8) auf ein Minimum begrenzt wird. Dies erlaubt den Aufbau eines Druckes im Rotorraum (8), der etwa dem Druck im Druckraum (6) der Kreiselpumpe (2) entspricht. Bei der Inbetriebnahme der Spaltrohrmotorpumpe wird der Rotorraum (8) über den Spalt (15) entlüftet. Im übrigen wird durch die drosselnde, den Durchfluß stark begrenzende Wirkung des Spaltes (15) der Eintrag von möglicherweise in der Förderflüssigkeit vorhandenen Feststoffpartikeln begrenzt. Außerdem wird ein Druckabbau an Engstellen des Rotorraums (8), der die Gefahr einer Verdampfung mit sich brächte, vermieden.

Es ist eine geduldete, sogar erwünschte Erscheinung, daß sich der Spalt (15) nach einem von der Art des Fördermediums abhängigen Zeitraum zusetzt und damit einen weiteren Durchfluß durch den Rotorraum (8) verhindert. Da wegen der indirekten Kühlung des Rotorraumes (8) die Durchströmung allein der Entlüftung dient, ist sie für den weiteren Betrieb nicht notwendig. Anstelle der Förderflüssigkeit kann auch jedes beliebige andere Kühlmedium durch den Wärmeaustauscher (9) geleitet werden.

## Patentansprüche

1. Im Sinne des Explosionsschutzes druckfest gekapselter Spaltrohrmotor (1) zum Antrieb einer mit einer Flüssigkeit in Berührung stehenden Maschine, insbesondere Spaltrohrmotor einer Kreiselpumpe (2) zur Förderung explosibler Flüssigkeiten, **gekennzeichnet durch** einen im Rotorraum (8) des Spaltrohrmotors (1) angeordneten Wärmeaustauscher (9), welcher von einem von außerhalb des Rotorraumes (8) kommenden Fluid durchströmt wird, und eine am Ausgang des Rotorraumes (8) angeordnete Öffnung (15), deren Größe so bemessen ist, daß einerseits die Entlüftung des Rotorraumes (8) bei Inbetriebnahme des Spaltrohrmotors (1) gewährleistet, andererseits der Durchstrom von Flüssigkeit auf ein erreichbares Mindestmaß begrenzt wird.

2. Spaltrohrmotor nach Anspruch 1, dadurch gekennzeichnet, daß ein von außerhalb des Aggregates kommendes Kühlfluid durch den Wärmeaustauscher (9) geleitet wird.

3. Spaltrohrmotor nach Anspruch 1, dadurch gekennzeichnet, daß die mit der angetriebenen Maschine (2) in Berührung stehende Flüssigkeit durch den Wärmeaustauscher (9) geleitet wird.

4. Spaltrohrmotor nach Anspruch 1, gekennzeichnet durch der Verwirbelung der Motorflüssigkeit dienende Vorsprünge (12) am Umfang der Rotorwelle (3) im Bereich des Wärmeaustauschers (9).

## Claims

1. A canned motor (1) with a pressure-tight capsule to render it explosion-proof, for driving a machine in contact with a liquid, more particularly a canned motor of a centrifugal pump (2) for pumping liquids with an explosion hazard, characterized by a heat exchanger (9) arranged in the rotor space (8) of the canned motor (1), and having fluid flowing through it which comes from outside the rotor space (8), and an opening (15) arranged at the outlet of the rotor space (8) with a size such that on the one hand venting of the rotor space (8) is ensured on putting the canned motor (1) into operation and on the other hand the flow of liquid is limited to an achievable minimum degree.

2. The canned motor as claimed in claim 1, characterized in that a cooling liquid coming from outside the unit is caused to flow through the heat exchanger (9).

3. The canned motor as claimed in claim 1, characterized in that the liquid which is in contact with the driven machine (2) is caused to pass through the heat exchanger (9).

4. The canned motor as claimed in claim 1, characterized by projections (12) for causing turbulence of the motor liquid on the periphery of the rotor shaft (3) adjacent to the heat exchanger (9).

## Revendications

1. Moteur à gaine (1), blindé, résistant à la pression, à protection antidéflagrante, pour l'entraînement d'une machine en contact avec un liquide, en particulier moteur à gaine d'une pompe centrifuge (2) pour le refoulement de liquides explosifs, caractérisé par un échangeur de chaleur (9) placé dans la chambre du rotor (8) du moteur à gaine (1), échangeur qui est traversé par un fluide venant de l'extérieur de la chambre du rotor (8), et caractérisé par une ouverture (15) placée à la sortie de la chambre du rotor (8), dont la taille est mesurée de telle manière que, d'une part, l'aération de la chambre du rotor (8) soit assurée lors de la mise en service du moteur à gaine (1), et que, d'autre part, le débit du liquide soit limité à un minimum accessible.

2. Moteur à gaine selon la revendication 1 caractérisé en ce qu'un fluide de refroidissement venant de l'extérieur de l'agrégat traverse l'échangeur de chaleur (9).

3. Moteur à gaine selon la revendication 1 caractérisé en ce que le liquide qui est en contact avec la machine entraînée (2) traverse l'échangeur de chaleur (9).

4. Moteur à gaine selon la revendication 1 caractérisé par des pièces en saillie (12) servant à faire tourbillonner le liquide du moteur et placées sur le pourtour de l'arbre du rotor (3) au niveau de l'échangeur de chaleur (9).
